(19) Europäisches Patentamt
European Patent Office
Office européen des brevets

(11) EP 2 887 601 B1

(12) FASCICULE DE BREVET EUROPEEN

(45) Date de publication et mention
de la délivrance du brevet:
26.09.2018 Bulletin 2018/39

(51) Int Cl.:
H04L 27/34 (2006.01)          H04L 25/03 (2006.01)
H04L 27/36 (2006.01)

(21) Numéro de dépôt: 14197852.8

(22) Date de dépôt: 15.12.2014

(54) **Procédé de génération de symboles pour le contrôle automatique de gain d'un signal à émettre**

Verfahren zur Erzeugung von Symbolen für die automatische Kontrolle der Verstärkung eines auszusendenden Signals

Method for generating symbols for automatic gain control of a signal to be emitted

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 20.12.2013 FR 1303031

(43) Date de publication de la demande:
24.06.2015 Bulletin 2015/26

(73) Titulaire: Thales
92400 Courbevoie (FR)

(72) Inventeur: Baptiste, François
92622 Gennevilliers Cedex (FR)

(74) Mandataire: Hammes, Pierre et al
Marks & Clerk France
Immeuble Visium
22, avenue Aristide Briand
94117 Arcueil Cedex (FR)

(56) Documents cités:
EP-A2- 0 886 388     EP-A2- 2 259 523
WO-A2-02/32018     FR-A1- 2 863 419

EP 2 887 601 B1

**Description**

La présente invention concerne le domaine des systèmes de communication par voie radio qui utilisent, pour mettre en forme le signal à transmettre, une modulation linéaire.

Un domaine lié à celui de l'invention est celui du contrôle automatique de gain d'une liaison sans fils. L'invention vise notamment à faciliter et améliorer le contrôle automatique de gain.

L'invention porte notamment sur un procédé de génération de symboles pour le contrôle automatique de gain, lesdits symboles étant configurés, en amplitude et en phase, pour minimiser la variation de la puissance du signal émis sur la portion de signal dédiée au contrôle automatique de gain.

Dans de nombreux standards de communications par voie radio, le signal à émettre est formaté selon une succession de trames de durée fixe entre lesquelles aucun signal n'est émis. Chaque trame débute en général par une séquence de symboles dédiés au contrôle automatique de gain, appelés par la suite symboles CAG, suivie d'une séquence composée de symboles d'information modulés.

Les symboles CAG permettent à un équipement destinataire du signal émis de contrôler le niveau ou la puissance du signal reçu de sorte à démoduler les symboles du signal avec un rapport signal à bruit suffisant.

Pour réaliser un contrôle automatique de gain, la puissance du signal émis sur la durée de la séquence CAG doit être sensiblement constante. Autrement dit, le but recherché est que les variations de puissance en début de trame ne soient pas trop importantes pour pouvoir mesurer précisément le niveau du signal. Cet objectif est particulièrement important pour le cas de modulations linéaires pour lesquels le gain du dispositif émetteur en fonction du signal modulant est linéaire.

Or, lorsqu'une trame est filtrée par un filtre de mise en forme avant son émission, l'influence du filtrage est telle que les premiers symboles d'information, qui sont adjacents à la séquence de symboles CAG, contribuent également à la portion dédiée au contrôle automatique de gain dans le signal réellement émis (c'est-à-dire après filtrage de mise en forme).

Ainsi, la propriété recherchée d'obtenir une puissance de signal sensiblement constante en début de chaque trame n'est pas respectée.

Un problème que cherche à résoudre l'invention est donc de trouver une solution qui permette de minimiser les variations d'amplitude du signal en début de chaque trame de sorte à améliorer la précision des mesures de puissance pour le contrôle automatique de gain.

Des méthodes de contrôle automatique de gain sont notamment décrites dans les publications EP2259523, US 6985099, WO2003071695 et WO 02/32018.

Ces solutions présentent notamment l'inconvénient d'être peu paramétrables et font appel, pour la génération des symboles de CAG, à des modulations hétérogènes vis-à-vis des symboles d'information. Les modulations employées présentent en général un rapport puissance crête sur puissance moyenne supérieur à un, ce qui complique la mise en oeuvre du contrôle automatique de gain.

L'invention vise à apporter une solution permettant d'assurer une variation d'amplitude minimum du signal dans sa portion dédiée au contrôle automatique de gain. Autrement dit, l'invention permet d'améliorer le profil de montée en puissance de début des paliers du signal. Elle s'applique également pour le profil de descente de fin des paliers et permet dans ce cas une amélioration de la qualité spectrale du signal.

L'invention est définie et limitée par la portée des revendications 1-7.

Dans la description suivante, tout mode de réalisation mentionné et n'étant pas compris dans la portée desdites revendications, est simplement un exemple utile à la compréhension de l'invention.

D'autres caractéristiques et avantages de la présente invention apparaîtront mieux à la lecture de la description qui suit en relation des figures annexées qui représentent :

- La figure 1, un schéma illustrant les étapes nécessaires à la génération d'un signal comprenant une portion dédiée au contrôle automatique de gain conformément à la méthode selon l'invention,
- La figure 2, un schéma illustrant les étapes nécessaires pour générer les symboles dédiés au contrôle automatique de gain dans une trame du signal selon un premier mode de réalisation,
- La figure 3a, un schéma illustrant les étapes nécessaires pour générer les symboles dédiés au contrôle automatique de gain dans une trame du signal selon un second mode de réalisation,
- La figure 3b, une variante du second mode de réalisation de l'invention,
- Les figures 4a et 4b, deux illustrations des variations d'amplitude du profil de montée en puissance d'un signal généré d'une part par une méthode de l'art antérieur et d'autre part par la méthode selon l'invention.

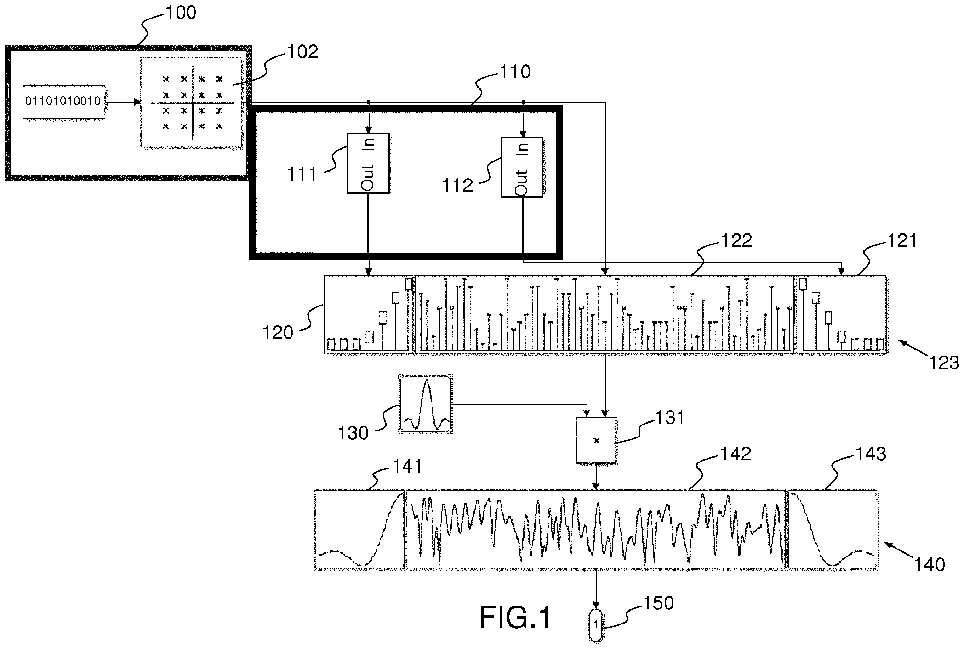

La figure 1 décrit, sur un schéma synoptique, la génération, selon l'invention, d'un signal de communication structuré selon une succession de trames. Le schéma de la figure 1 illustre la génération d'une trame de signal. Le signal émis est constitué d'une pluralité de trames concaténées.

Une séquence d'information binaire 101 est modulée en une séquence de symboles d'information 102 appartenant à une constellation donnée. La modulation employée peut être une modulation en phase ou en amplitude ou toute autre modulation. La génération 100 de symboles d'information modulés aboutit à l'obtention d'une séquence 122 de symboles d'information modulés.

Selon l'invention, on génère 111, à partir du premier ou des premiers symboles d'information modulés, un ensemble 120 de symboles dédiés au contrôle automatique de gain. Cet ensemble 120 de symboles CAG est positionné en début de trame, c'est-à-dire avant la séquence 122 de symboles d'information.

Selon une variante de réalisation de l'invention, on génère 112 également, à partir du dernier ou des derniers symboles d'information modulés, un ensemble 121 de symboles de fin de trame positionnés après les symboles d'information 122. Ces symboles de fin de trame sont notamment utiles pour améliorer l'occupation spectrale du signal et minimiser l'impact des symboles de fin de trame sur le spectre.

La séquence de symboles 123 ainsi constituée est ensuite convoluée temporellement 131 avec un filtre de mise en forme 130 pour obtenir un signal filtré 140 prêt à être émis par une antenne 150. Le signal filtré 140 comporte, pour chaque trame, une première portion 141 correspondant aux symboles CAG filtrés, une seconde portion 142 correspondant aux symboles d'information filtrés et une troisième portion 143 correspondant aux symboles de fin de trame filtrés.

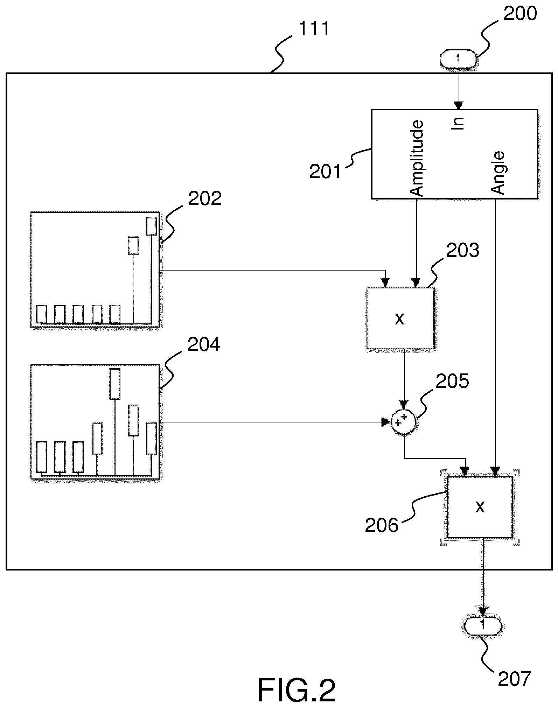

La figure 2 explicite plus en détail l'étape 111 de génération des symboles CAG selon l'invention.

A partir du premier symbole d'information modulé 200, on récupère 201 l'amplitude et la phase de ce premier symbole. Une première séquence de coefficients 202 est générée et multipliée 203 par l'amplitude du premier symbole 200. Une seconde séquence de coefficients 204 est générée et ajoutée 205 au résultat de la multiplication 203. Enfin, les symboles obtenus en sortie de l'addition 205 sont recalés 206 avec la phase du premier symbole d'information modulé 200.

Autrement dit, l'amplitude des symboles CAG générés est une fonction linéaire de l'amplitude du premier symbole d'information modulé 200 et la phase des symboles CAG est constante pour tous les symboles CAG et est égale à la phase du premier symbole d'information modulé 200. L'amplitude des symboles CAG est choisie de telle sorte car la modulation employée pour moduler les symboles d'information est une modulation linéaire, par exemple une modulation QAM (Quadrature Amplitude Modulation) ou APSK (Amplitude and Phase-Shift Keying Modulation). Pour compenser l'influence des premiers symboles d'information modulés sur la séquence de symboles CAG filtrés, il est avantageux que les symboles CAG soient eux-mêmes d'amplitude linéaire en fonction du ou des symboles d'information modulés.

La première séquence de coefficients 202 et la seconde séquence de coefficients 204 sont déterminées de manière à obtenir un niveau d'amplitude du signal sensiblement constant sur la portion du signal correspondant aux symboles CAG filtrés par le filtre de mise en forme.

Un symbole CAG peut être représenté par la relation suivante :

$C_i = xA_i + B_i$, avec $C_i$ un symbole CAG, $A_i$ un coefficient de la première séquence 202, $B_i$ un coefficient de la seconde séquence 204, $x$ l'amplitude du premier symbole d'information 200 et $i$ variant de 0 à N, N étant le nombre de symboles CAG souhaité.

Les coefficients $A_i$ et $B_i$ sont déterminés de sorte à ce que le résultat du filtrage des symboles CAG $C_i$ par le filtre de mise en forme soit sensiblement constant sur la durée de la séquence CAG.

Ce critère peut être formalisé comme la recherche du minimum de la fonction f() suivante, où $g(A_0, A_1, ..., A_n, B_0, ..., B_n, t, x)$ représente le résultat du filtrage des symboles CAG à un instant t et $n_0$ est la cible visée pour l'amplitude du signal filtré.

$$f(A_0, A_1, ..., A_n, B_0, ..., B_n) = \sum_{t \in T} (g(A_0, A_1, ..., A_n, B_0, ..., B_n, t, x) - n_0)^2$$

La fonction f() correspond à l'énergie moyenne, sur une durée T, de l'écart entre le signal filtré et la cible d'amplitude $n_0$.

Dans une variante de réalisation de l'invention, plusieurs symboles d'information modulés sont utilisés au lieu d'un seul. L'utilisation, telle que décrite ci-dessus, d'un symbole d'information modulé pour construire les symboles CAG désirés permet de lutter contre l'influence du premier symbole d'information sur la séquence CAG filtrée. Par analogie, l'utilisation de plusieurs symboles d'information modulés pour construire les symboles CAG désirés permet de lutter contre l'influence de plusieurs symboles d'information sur la séquence CAG filtrée. De façon pratique, plus un symbole d'information est éloigné dans le temps des symboles CAG, plus son influence décroit, c'est pour cette raison que le mode de réalisation préféré de l'invention est celui décrit ci-dessus qui n'utilise qu'un seul symbole d'information.

Cependant, dans le cas où l'invention est mise en oeuvreen exploitant l'influence de plusieurs symboles d'information, l'amplitude des symboles CAG est construite à l'aide de la relation suivante :

$C_i = x_1.A_{1,i} + B_{1,i} + x_2.A_{2,i} + B_{2,i} +...+ x_m.A_{m,i} + B_{m,i}$ où m est le nombre de symboles d'information modulés utilisés, $x_1$ est l'amplitude du premier symbole d'information et $x_2,...x_m$ sont les amplitudes des autres symboles d'information modulés, préalablement projetées sur la direction formée par la phase du premier symbole d'information.

La phase des symboles CAG est prise constante égale à la phase du premier symbole d'information modulé.

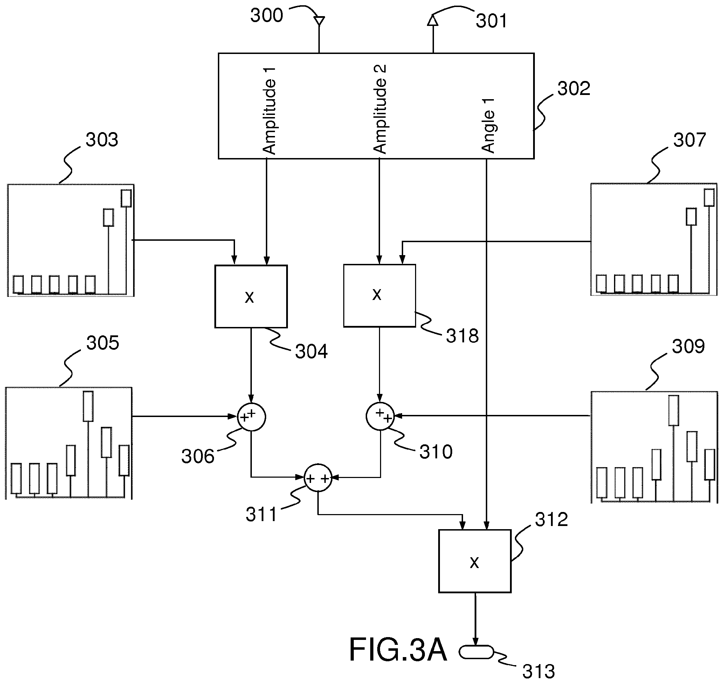

Ce mode de réalisation est illustré sur la figure 3a pour le cas particulier de deux symboles d'information modulés 300, 301.

Dans une étape 302 du procédé, on extrait l'amplitude et la phase du premier symbole d'information 300 ainsi que l'amplitude du second symbole d'information 301.

L'amplitude du second symbole d'information 301 est projetée sur la direction formée par l'angle de la phase du premier symbole d'information 300. Cette opération est effectuée de sorte à pouvoir effectuer des sommations cohérentes entre deux symboles complexes qui n'ont pas la même phase.

Ensuite, on applique une fonction linéaire à l'amplitude du premier symbole d'information 300 à partir d'une première séquence de coefficients 303 et d'une seconde séquence de coefficients 305. La même opération est réalisée pour l'amplitude projetée du second symbole d'information 301 à partir d'une troisième séquence de coefficients 307 et d'une quatrième séquence de coefficients 309. In fine, les résultats des deux opérations linéaires sont sommés 311 pour obtenir l'amplitude des symboles CAG. La phase des symboles CAG est prise égale à la phase du premier symbole d'information 301.

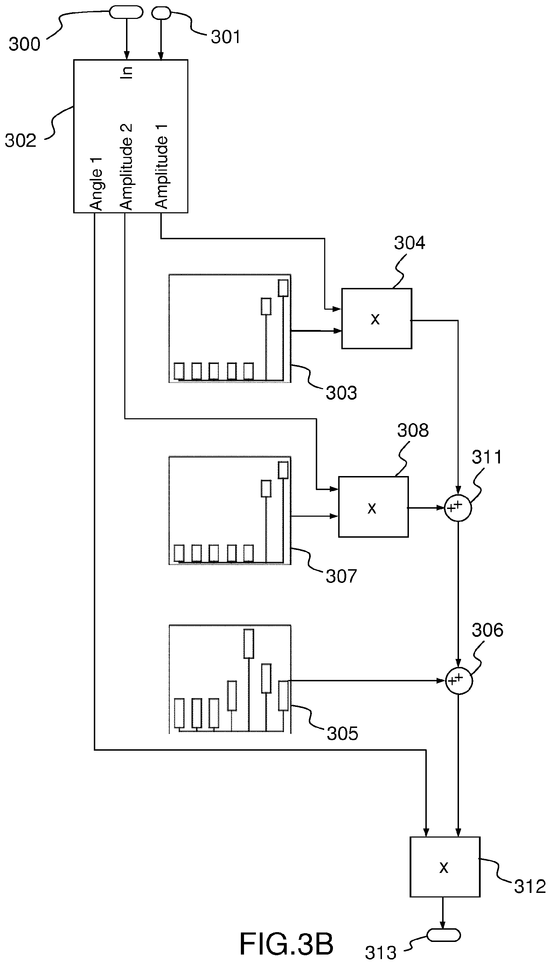

Avantageusement, la deuxième séquence 305 et la quatrième séquence 309 peuvent être remplacées par une seule et même séquence qui est additionnée directement avec le résultat de la somme 311 entre les deux multiplications 304,308. Cette variante de réalisation est détaillée sur la figure 3b.

Sans perte de généralité, l'invention peut également être mise en oeuvre pour plus de deux symboles d'information modulés.

Dans une autre variante de réalisation de l'invention, les symboles générés selon l'invention peuvent être positionnés non plus en début de trame mais en fin de trame comme représenté par la référence 121 sur la figure 1.

Un avantage à la limitation des variations d'amplitude en fin de trame est que cela induit une meilleure qualité spectrale du signal ainsi généré.

Dans les exemples de réalisation décrits ci-dessus, on utilise une fonction linéaire de l'amplitude du ou des symboles d'information modulés pour calculer les symboles CAG.

Sans perte de généralité, il est également possible d'utiliser une fonction non linéaire ou toute fonction déterministe dans la mesure où les symboles CAG calculés dépendent au moins d'un symbole d'information modulé.

La valeur complexe des symboles CAG peut également être déterminée directement en fonction de la valeur complexe du ou des symboles d'information modulés sans forcément effectuer de façon séparée le calcul de l'amplitude et le calcul de la phase des symboles CAG.

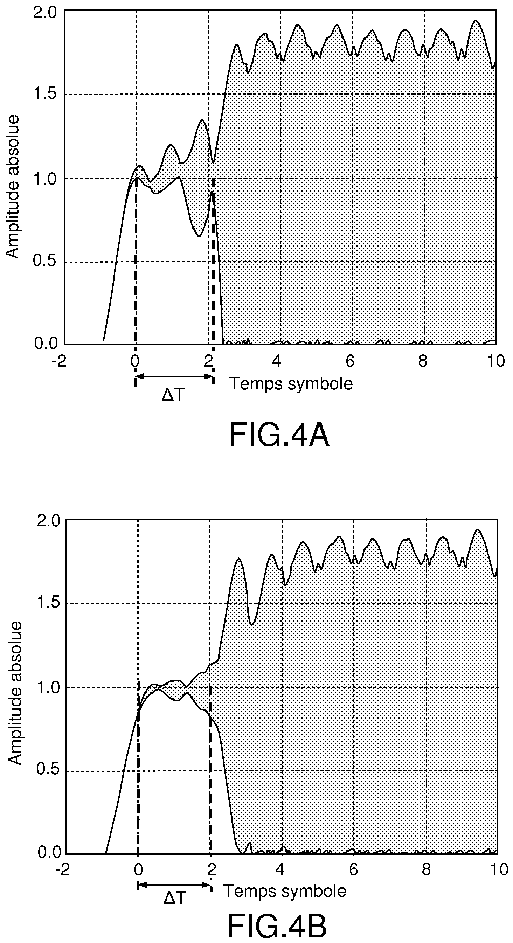

Les figures 4a et 4b illustrent les résultats obtenus grâce à la mise en oeuvre de l'invention.

La figure 4a donne l'allure de l'amplitude d'un signal en fonction du temps dans le cas où les symboles CAG sont de valeur et phase quelconques. On remarque que sur la durée $\Delta T$ de la séquence dédiée au contrôle automatique de gain, les variations d'amplitude sont non négligeables.

Sur la figure 4b est représenté la même portion temporelle du signal dans le cas où l'invention est mise en oeuvre pour déterminer les symboles CAG. Dans ce cas, les variations d'amplitude sur la séquence CAG sont limitées ce qui permet de réaliser le contrôle automatique de gain avec une meilleure précision.

Le signal généré par application du procédé selon l'invention permet ainsi de réaliser le contrôle automatique de gain avec une meilleure précision que pour un signal généré avec des symboles CAG de valeurs quelconques.

Le procédé selon l'invention peut être mis en oeuvre par un équipement émetteur. Il peut être implémenté via un processeur et une mémoire.

Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gâte Array »).

## Revendications

1.  Procédé de génération d'un ensemble (120,121) de symboles, appelés symboles CAG, pour le contrôle automatique de l'amplitude d'un signal à émettre (140), ledit signal comprenant ledit ensemble de symboles CAG et au moins un premier symbole d'information modulé avec une modulation linéaire, ledit procédé comprenant les étapes suivantes :

    - Sélectionner un groupe de symboles d'information modulés comprenant au moins un symbole d'information modulé,

- Déterminer (111,112) chaque symbole CAG dudit ensemble comme suit :
- L'amplitude d'un symbole CAG est égale à une fonction linéaire de l'amplitude d'au moins un symbole dudit groupe,
- La phase d'un symbole CAG est égale à la phase d'au moins un symbole dudit groupe,
- les coefficients de ladite fonction linéaire étant configurés de manière à obtenir un niveau d'amplitude du signal sensiblement constant sur la portion du signal correspondant auxdits symboles CAG filtrés par un filtre de mise en forme,
- les symboles CAG étant adjacents audit groupe de symboles d'information modulés.

2. Procédé de génération de symboles CAG selon la revendication 1 dans lequel les coefficients de ladite fonction linéaire sont déterminés en fonction du filtre de mise en forme et du niveau d'amplitude désiré sur ladite portion du signal.

3. Procédé de génération de symboles CAG selon l'une des revendications précédentes dans lequel ledit groupe comprend plusieurs symboles d'information modulés et l'amplitude d'un symbole CAG est égale à la somme entre, d'une part, une fonction linéaire de l'amplitude du premier symbole d'information modulé dudit groupe et d'autre part, une somme de fonctions linéaires de l'amplitude des autres symboles d'information modulés dudit groupe, projetée sur la direction formée par la phase dudit premier symbole d'information modulé dudit groupe.

4. Procédé de génération de symboles CAG selon l'une des revendications précédentes dans lequel ledit signal est formaté en une pluralité de trames, lesdits symboles CAG étant positionné en début ou en fin de trame.

5. Procédé de génération d'un signal à émettre, ledit signal étant formaté en une pluralité de trames comprenant chacune au moins une séquence de symboles CAG obtenus par application du procédé selon l'une des revendications 1 à 4 et une séquence de symboles d'information modulés par une modulation linéaire, lesdits symboles CAG et lesdits symboles d'information étant filtrés par un filtre de mise en forme.

6. Signal à émettre obtenu par l'application du procédé de génération d'un signal selon la revendication 5.

7. Emetteur comprenant des moyens configurés pour mettre en oeuvre le procédé de génération d'un signal à émettre selon la revendication 5.

**Patentansprüche**

1. Verfahren zur Erzeugung einer Gruppe (120, 121) von Symbolen, genannt AGC-Symbole, zur automatischen Kontrolle der Amplitude eines zu sendenden Signals (140), wobei das Signal die Gruppe von AGC-Signalen und mindestens ein erstes mit einer Linearmodulation moduliertes Informationssymbol beinhaltet, wobei das Verfahren folgende Schritte beinhaltet:

- Auswählen einer Gruppe von modulierten Informationssymbolen, welche mindestens ein moduliertes Informationssymbol beinhaltet,
- Bestimmen (111, 112) eines jeden AGC-Symbols der Gruppe wie folgt:
- Die Amplitude eines AGC-Symbols ist gleich einer linearen Funktion der Amplitude von mindestens einem der Symbole der Gruppe,
- Die Phase eines AGC-Symbols ist gleich der Phase von mindestens einem der Symbole der Gruppe,
- wobei die Koeffizienten der linearen Funktion konfiguriert sind, um einen im Wesentlichen konstanten Amplitudenpegel über denjenigen Abschnitt des Signals zu erzielen, welcher den durch einen Formungsfilter gefilterten AGC-Symbolen entspricht,
- wobei die AGC-Symbole an die Gruppe der modulierten Informationssymbole angrenzen.

2. Verfahren zur Erzeugung von AGC-Symbolen nach Anspruch 1, bei welchem die Koeffizienten der Linearfunktion anhand des Formungsfilters und des gewünschten Amplitudenpegels über den Signalabschnitt bestimmt werden.

3. Verfahren zur Erzeugung von AGC-Symbolen nach einem der vorhergehenden Ansprüche, bei welchem die Gruppe mehrere modulierte Informationssymbole beinhaltet und die Amplitude eines AGC-Symbols gleich der Summe zwischen einerseits einer linearen Funktion der Amplitude des ersten modulierten Informationssymbols der Gruppe ist und andererseits, zwischen einer Summe von linearen Funktionen der Amplitude der anderen modulierten Informationssymbole der Gruppe, projiziert in die Richtung, die durch die Phase des ersten modulierten Informationssymbols der Gruppe gebildet wird.

4. Verfahren zur Erzeugung von AGC-Symbolen nach einem der vorhergehenden Ansprüche, bei welchem das Signal zu einer Vielzahl von Rahmen formatiert wird, wobei die AGC-Symbole zu Beginn oder Ende eines Rahmens positioniert sind.

5. Verfahren zur Erzeugung eines zu sendenden Signals, wobei das Signal zu einer Vielzahl von Rahmen formatiert wird, welche jeweils mindestens eine Sequenz von AGC-Symbolen enthalten, die durch Anwendung des Verfahrens nach einem der Ansprüche 1 bis 4 erzielt werden und eine Sequenz von mit einer Linearmodulation modulierten Informationssymbolen, wobei die AGC-Symbole und die Informationssymbole durch einen Formungsfilter gefiltert werden.

6. Zu sendendes Signal, welches durch Anwendung des Verfahrens nach Anspruch 5 erzielt wird.

7. Sender, beinhaltend Mittel, welche konfiguriert sind, um das Verfahren zur Erzeugung eines zu sendenden Signals nach Anspruch 5 umzusetzen.

**Claims**

1. A method for generating a set (120, 121) of symbols, called AGC symbols, for automatically controlling the amplitude of a signal (140) to be transmitted, said signal comprising said set of AGC symbols and at least one first information symbol modulated with a linear modulation, said method comprising the following steps:

   - selecting a group of modulated information symbols comprising at least one modulated information symbol;
   - determining (111, 112) each AGC symbol of said set as follows:
   - the amplitude of an AGC symbol is equal to a linear function of the amplitude of at least one symbol of said group;
   - the phase of an AGC symbol is equal to the phase of at least one symbol of said group;
   - the coefficients of said linear function are configured so as to obtain an amplitude level of the signal that is substantially constant over the portion of the signal corresponding to said AGC symbols filtered by a shaping filter;
   - the AGC symbols are adjacent to said group of modulated information symbols.

2. The method for generating AGC symbols as claimed in claim 1, wherein the coefficients of said linear function are determined as a function of the shaping filter and of the desired amplitude level over said portion of the signal.

3. The method for generating AGC symbols as claimed in any one of the preceding claims, wherein said group comprises a plurality of modulated information symbols and the amplitude of an AGC symbol is equal to the sum between, on the one hand, a linear function of the amplitude of the first modulated information symbol of said group and, on the other hand, a sum of linear functions of the amplitude of the other modulated information symbols of said group projected in the direction formed by the phase of said first modulated information symbol of said group.

4. The method for generating AGC symbols as claimed in any one of the preceding claims, wherein said signal is formatted as a plurality of frames, said AGC symbols being positioned at the start or at the end of a frame.

5. A method for generating a signal to be transmitted, said signal being formatted as a plurality of frames each comprising at least one sequence of AGC symbols obtained by applying the method as claimed in any one of claims 1 to 4 and a sequence of information symbols modulated by a linear modulation, said AGC symbols and said information symbols being filtered by a shaping filter.

6. A signal to be transmitted that is obtained by applying the method for generating a signal as claimed in claim 5.

7. A transmitter comprising means configured to implement the method for generating a signal to be transmitted as claimed in claim 5.

FIG.1

EP 2 887 601 B1

FIG.2

8

FIG.3A

FIG.3B

FIG.4A

FIG.4B

EP 2 887 601 B1

## RÉFÉRENCES CITÉES DANS LA DESCRIPTION

**Documents brevets cités dans la description**

- EP 2259523 A
- US 6985099 B
- WO 2003071695 A
- WO 0232018 A